# FASCICULE DE BREVET EUROPEEN

(11) **EP 0 482 980 B1**
(45) Date de publication et mention de la délivrance du brevet: **23.02.1994**
(21) Numéro de dépôt: 91402740.4
(22) Date de dépôt: 14.10.1991
(51) Int. Cl.: C22B 11/02, C22B 7/00

(54) **Procédé de récupération des platinoides déposés en couches minces sur un substrat en céramique provenant d'un catalyseur usagé**
Verfahren zur Rückgewinnung von Platingruppenmetalle von dünnfilmbeschichteten Keramiksubstraten gebrauchter Katalysatoren
Method for recovering platinum group metals, deposited as thin films ou ceramic substrates, from used catalysts

(30) Priorité: 16.10.1990 FR 9012745
(43) Date de publication de la demande: 29.04.1992
(73) Titulaire: COMMISSARIAT A L'ENERGIE ATOMIQUE, 75015 Paris (FR)
(72) Inventeur: Boen, Roger, F-30130 Saint Alexandre (FR)
(74) Mandataire: Mongrédien, André

(56) Documents cités:
- EP-A- 0 048 823
- DE-C- 3 816 697
- US-A- 4 428 768
- JOURNAL OF METALS vol. 40, no. 6, Juin 1988, WARRENDALE, PA, US pages 40 - 44; J. E. HOFFMANN: 'Recovering platinum-group metals from auto catalysts'

## Description

La présente invention se rapporte d'une manière générale au domaine des catalyseurs qui sont réalisés par dépôt sur un substrat en céramique d'une couche mince d'un métal de la famille du platine, tel que par exemple le platine, le palladium et le rhodium.

De tels catalyseurs sont couramment utilisés dans l'industrie et plus particulièrement dans les pots d'échappement des voitures automobiles où ils servent au traitement des gaz d'échappement des moteurs de ces mêmes automobiles.

De tels catalyseurs vieillissent dans le temps et finissent par perdre leur efficacité, notamment dans le cas des catalyseurs pour pots d'échappement d'automobile par suite de l'empoisonnement qui résulte de la présence de plomb dans le combustible. Or, les composés platinoïdes sont des métaux précieux relativement chers qu'il est intéressant de récupérer. Cette récupération n'est toutefois pas facile à réaliser car elle nécessite une séparation des platinoïdes de la céramique qui leur sert de support et cette séparation est rendue difficile par le fait que la teneur pondérale en platinoïdes n'est que de l'ordre de quelques parties pour mille de la masse du substrat lui-même.

On a certes envisagé de fondre dans des fours en matière réfractaire, la céramique et les platinoïdes qui la revêtent pour séparer par décantation les platinoïdes qui ont une densité plus grande que la céramique fondue puisque le platine a une densité de 21,4, le rhodium de 12,4 et le palladium de 12. Malheureusement, les températures nécessaires pour réaliser cette fusion sont très élevées, de l'ordre par exemple de 1600°C pour la palladium et 2000°C pour le rhodium et les fours en matière réfractaire que l'on peut utiliser à cet effet résistent très mal à une telle température ainsi qu'à l'agressivité de la céramique et des platinoïdes fondus.

Le document EP-A-48823 qui représente l'art antérieur le plus proche, décrit un procédé de récupération de métaux précieux déposés sur un substrat en céramique provenant de catalyseurs usagés. L'ensemble du substrat et des métaux précieux est fondu dans un four électrique, puis les métaux précieux se rassemblant par gravité dans le fond du mélange liquide, sont recueillis après refroidissement et solidification de ce mélange, soit dans le fond du four, soit à l'extérieur. Un tel procédé ne peut malheureusement pas être appliqué en continu et nécessite des cycles successifs de remplissage du four, fusion du mélange, refroidissement et séparation.

La présente invention a précisément pour objet un procédé de récupération de ces platinoïdes à partir du substrat de céramique qui leur sert de support, à l'aide de moyens industriels simples à mettre en oeuvre et qui permettent de plus une récupération en continu.

Ce procédé de récupération en continu des platinoïdes déposés en couche mince sur un substrat en céramique provenant d'un catalyseur usagé, est caractérisé en ce que l'on réalise la fusion de l'ensemble du substrat et des platinoïdes par induction directe à haute fréquence dans un creuset froid sectorisé (2), et en ce que l'on sépare par décantation les platinoïdes (22) qui se rassemblent par gravité au fond du creuset, ledit creuset étant alimenté au démarrage par une masse de céramique préalablement fondue et ensuite, en continu, par catalyseur froid, le fonctionnement en continu étant assuré par le fait que l'on munit le creuset (2) à son sommete d'une goulotte (18) d'évacuation permanente de la céramique fondue débarrassée de ses platinoïdes, et, à sa partie inférieure, d'une buse d'évacuation (20), munie d'une vanne (24), pour la récupération de ces mêmes platinoïdes.

L'utilisation d'un creuset à parois froides qui permet de réaliser une croûte isolante entre la paroi proprement dite du creuset et la masse en fusion, résoud les problèmes d'agressivité que l'on rencontrait avec les parois des fours réfractaires.

Selon une caractéristique secondaire mais importante de la présente invention, le procédé peut être amélioré par un brassage du bain liquide en fusion pour accélérer la coalescence et la décantation des platinoïdes. Ce brassage peut être réalisé notamment par tout moyen connu tel que par exemple le bullage d'un gaz à travers la solution ou une agitation de celle-ci à l'aide d'un agitateur mécanique.

Selon un mode de mise en oeuvre spécialement intéressant du procédé objet de l'invention, on réalise l'opération de récupération en continu en munissant le creuset à son sommet d'une goulotte d'évacuation permanente de la céramique fondue débarrassée de ses platinoïdes, et, à sa partie inférieure, d'une buse d'évacuation, munie d'une vanne, pour la récupération de ces mêmes platinoïdes.

Dans ce dernier cas, il est intéressant pour éviter que ne soit évacuée par la goulotte supérieure de la céramique fondue mais non encore traitée, de placer, au voisinage de cette goulotte supérieure d'évacuation, un dispositif de barrage.

Enfin, dans certains cas de mise en oeuvre du procédé, il peut être intéressant pour maintenir les platinoïdes en fusion au fond du creuset lorsque ceux-ci sont en quantité relativement importante, de prévoir un second inducteur auxiliaire de chauffage à moyenne fréquence, par exemple de 1 à 10 kHz, que l'on place alors sous l'inducteur principal à haute fréquence.

Pour éviter l'oxydation possible de certains métaux employés comme catalyseur, on peut également prévoir des moyens de contrôle de l'atmosphère qui surmonte le creuset de façon à effectuer la séparation sous une atmosphère réductrice ou utiliser un gaz de barbotage réducteur. A l'inverse, si le métal utilisé comme catalyseur résiste bien à l'oxydation et s'il est empoisonné par des métaux oxydables, il peut être intéressant de travailler sous une atmosphère oxydante ou avec un gaz de barbotage oxydant. D'une façon générale par conséquent, il peut être intéressant de prévoir des moyens de contrôle permettant de régler le pouvoir oxydant ou réducteur de l'atmosphère qui surmonte le creuset.

Un des avantages du procédé de fusion en creuset à haute température, objet de la présente invention, est qu'il permet sans difficulté d'évaporer les composants volatils, tel que le plomb par exemple qui empoisonnent couramment les catalyseurs et notamment les catalyseurs de pots d'échappement automobiles.

Le creuset à parois froides utilisé pour la mise en oeuvre du procédé objet de l'invention est un creuset sectorisé, c'est-à-dire composé par la juxtaposition d'un certain nombre de secteurs autonomes dont l'étanchéité, vis-à-vis de l'extérieur, découle de la création de la couche solide de céramique au voisinage de la paroi froide. Ce mode de mise en oeuvre permet notamment le montage et le démontage facile du creuset lorsque l'on souhaite recourir à un tel démontage pour récupérer les platinoïdes présents au fond du creuset.

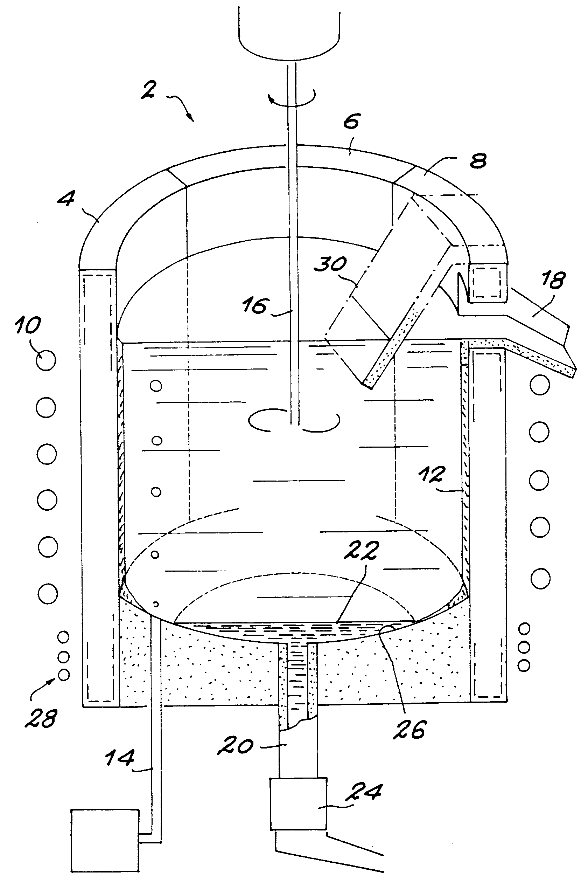

De toute façon l'invention sera mieux comprise à la lecture qui suit d'un exemple de mise en oeuvre du procédé, description qui sera faite en se référant à la figure unique ci-jointe.

Sur la figure unique on a représenté le creuset 2 constitué par la juxtaposition d'un certain nombre de secteurs indépendants tels que 4, 6 et 8 ayant une forme cylindrique complémentaire les uns des autres de façon à réaliser une enveloppe ayant la forme d'un cylindre fermé. Chacun de ces secteurs 4, 6, 8 comporte une entrée et une sortie de fluide de refroidissement qui permet de maintenir la paroi du creuset à relativement basse température. Ce creuset que l'on peut ainsi qualifier de creuset froid est entouré d'une bobine inductrice 10, destinée à être parcourue par un courant à haute fréquence, par exemple de 50 à 1000 kHz, pour entretenir la fusion de la céramique que l'on veut traiter.

Lors du démarrage cette dernière est introduite après avoir été fondue par tout moyen connu, sous forme liquide à l'intérieur du creuset et elle est dans cet état suffisamment conductrice de l'électricité pour pouvoir être chauffée par induction directe à l'aide d'un courant à haute fréquence qui traverse l'inducteur 10. Dès que l'on verse cette céramique fondue dans le creuset à paroi froide, se forme une croûte isolante 12 de céramique solidifiée qui protège les parois du creuset et réalise l'étanchéité entre les différents secteurs tels que 4, 6 et 8 par exemple.

Le démarrage peut aussi être réalisé en fondant la céramique à l'intérieur du creuset par un système annexe (suscepteur en Zr par exemple). Après L'opération de démarrage le four est alimenté en continu en catalyseur usagé froid qui fond lors de son immersion dans la céramique fondue.

Dans l'exemple représenté sur la figure, deux moyens de brassage du bain de céramique fondue ont été représentés à savoir une canalisation 14 pour l'injection de bulles dans la masse liquide et un agitateur mécanique 16 mobile en rotation par tout moyen approprié. Il n'est pas nécessaire en général d'utiliser ces deux moyens simultanément et l'homme de métier choisit celui qui lui convient dans chaque cas particulier. Conformément à l'invention, le creuset 2 comporte à sa partie supérieure une goulotte supérieure d'évacuation 18 de la masse de céramique fondue et à sa partie inférieure une buse d'évacuation 20 de la masse de métaux platinoïdes 22 qui se sont déposés par gravité à cet endroit après leur mise en fusion dans le bain liquide.

On conçoit parfaitement la possibilité, si l'on apporte en permanence du catalyseur usagé à traiter dans le bain, de réaliser un fonctionnement en continu, la céramique débarrassée de ces platinoïdes et des impuretés s'écoulant spontanément à la partie supérieur par la goulotte 18 et la buse d'évacuation 20 en liaison avec une vanne 24 permettant de soutirer les platinoïdes fondus 22.

On peut aussi envisager un fonctionnement semi continu de l'installation, sur une centaine d'heures par exemple, avec une évacuation continue de la céramique fondue et une accumulation des platinoïdes au fond du creuset. La séparation s'effectue alors de façon manuelle après arrêt de l'installation et refroidissement du four. Le fonctionnement est possible en raison du faible volume des platinoïdes par rapport à celui de la céramique.

Au cours de la mise en oeuvre du procédé, on adapte la puissance électrique à haute fréquence émise par l'inducteur 10 pour que la température de la céramique fondue soit supérieure à la température de fusion des platinoïdes contenus dans le catalyseur. La coalescence et la décantation des platinoïdes est accélérée par les moyens 14 et 16 d'agitation du bain fondu.

Les platinoïdes fondus 22 se rassemblent sur le fond froid 26 du creuset qui a de préférence un profil courbe permettant le rassemblement des platinoïdes 22 sous la forme d'une galette dans le fond 26 du creuset. Dans le cas où la hauteur des platinoïdes 22 présents au fond du four est relativement faible, le transfert thermique provenant de la céramique fondue est suffisant pour les maintenir eux-mêmes à l'état fondu. Dans le cas contraire, il faut envisager un moyen de chauffage additionnel pour les maintenir dans cet état de fusion et l'on peut par exemple placer un deuxième inducteur auxiliaire 28 fonctionnant à moyenne fréquence (de 1 à 10 kHz par exemple) que l'on place sous l'inducteur principal à haute fréquence 10.

Dans l'exemple représenté sur la figure unique, l'évacuation continue de la céramique fondue débarrassée de ses platinoïdes a lieu par la goulotte d'évacuation supérieure 18, laquelle traverse la paroi du creuset froid. On peut envisager dans d'autres modes de mise en oeuvre d'utiliser une buse qui remonte à travers le fond du creuset jusqu'à la surface du bain fondu. Enfin, un dispositif de barrage 30 est situé au voisinage de la partie supérieure du creuset et de la goulotte d'évacuation 18 pour empêcher l'évacuation prématurée vers l'extérieur de la céramique fondue qui n'aurait pas encore été débarrassée de ses platinoïdes.

Dans une réalisation particulière de l'installation on peut modifier le creuset froid de façon à lui faire aussi jouer le rôle d'inducteur. Il s'agit de la technologie dite de "spire directe" où le creuset ne comporte qu'une seule fente et joue le rôle d'un inducteur à une seule spire. Le rendement électrique est meilleur, mais il apparaît un risque important de court-circuit entre les bords de l'unique fente du creuset.

## Revendications

1. Procédé de récupération des platinoïdes déposés en couche mince sur un substrat en céramique provenant d'un catalyseur usagé, dans lequel on fond la céramique et les platinoïdes dans un creuset et puis on sépare par décantation les platinoïdes (22) qui se rassemblent par gravité au fond du creuset, caractérisé en ce que l'on réalise en continu la fusion de l'ensemble du substrat et des platinoïdes par induction directe à haute fréquence dans un creuset froid sectorisé (2), ledit creuset étant alimenté au démarrage par une masse de céramique préalablement fondue et ensuite, en continu, par du catalyseur froid, usagé, le fonctionnement en continu étant assuré par le fait que l'on munit le creuset (2) à son sommet d'une goulotte (18) d'évacuation permanente de la céramique fondue débarrassée de ses platinoïdes, et, à sa partie inférieure, d'une buse d'évacuation (20), munie d'une vanne (24), pour la récupération de ces mêmes platinoïdes.

2. Procédé selon la revendication 1, caractérisé en ce que l'on effectue un brassage du bain fondu pour accélérer la coalescence et la décantation des platinoïdes.

3. Procédé selon la revendication 1, caractérisé en ce que le creuset comporte une seule fente et joue aussi le rôle d'inducteur à une seule spire.

4. Procédé selon la revendication 2, caractérisé en ce que le brassage du bain fondu est réalisé par un bullage d'un gaz à travers la solution.

5. Procédé selon la revendication 2, caractérisé en ce que le brassage du bain fondu est réalisé par une agitation mécanique de la solution.

6. Procédé selon la revendication 5, caractérisé en ce que l'on munit le creuset (2), au voisinage de la goulotte supérieure d'évacuation (18), d'un dispositif de barrage (30) pour empêcher l'évacuation vers l'extérieur de la céramique non traitée.

7. Procédé selon l'une quelconque des revendication 1 à 5, caractérisé en ce que l'on maintient les platinoïdes en fusion au fond du creuset à l'aide d'un second inducteur auxiliaire (28) de chauffage à moyenne fréquence situé sous l'inducteur principal (10) à haute fréquence.

8. Procédé selon l'une quelconque des revendications 1 à 7 précédentes, caractérisé en ce que l'atmosphère surmontant le creuset est contrôlée pour régler son pouvoir oxydant ou réducteur.

## Patentansprüche

1. Verfahren zur Rückgewinnung von Platingruppenmetallen von dünnfilmbeschichteten Keramiksubstraten gebrauchter Katalysatoren, in welchem man die Keramik und die Platingruppenmetalle in einem Tiegel schmilzt und dann durch Dekantieren die Platingruppenmetalle (22) abtrennt, die sich durch die Gravitation am Boden des Tiegels sammeln, dadurch gekennzeichnet, daß man kontinuierlich das Schmelzen der Einheit aus Substrat und Platingruppenmetallen durch direkte Hochfrequenzinduktion in einem kalten sektorisierten Tiegel (2) ausführt, wobei besagter Tiegel zum Anlaufen mit einer vorher geschmolzenen Keramikmasse und dann kontinuierlich mit kalten gebrauchten Katalysatoren gefüllt wird, wobei das kontinuierliche Funktionieren dadurch gesichert wird, daß man den Tiegel (2) an seinem oberen Rand mit einem Auslauf (18) zur fortwährenden Entleerung der geschmolzenen und von ihren Platingruppenmetallen befreiten Keramik, und in seinem inneren Teil mit einer Entleerungsdüse (20) ausstattet, die mit einem Ventil (24) ausgestattet ist, zur Rückgewinnung eben dieser Platingruppenmetalle.

2. Verfahren gemäß Anspruch 1, dadurch gekennzeichnet, daß man ein Umrühren des Schmelzbades ausführt, um die Koaleszenz und das Dekantieren der Platingruppenmetalle zu beschleunigen.

3. Verfahren gemäß Anspruch 1, dadurch gekennzeichnet, daß der Tiegel einen einzigen Spalt umfaßt und außerdem die Rolle des Induktors mit einer einzigen Umdrehung spielt.

4. Verfahren gemäß Anspruch 2, dadurch gekennzeichnet, daß das Umrühren des Schmelzbades mittels Gasdurchperlen ausgeführt wird, die die Lösung durchdringen.

5. Verfahren gemäß Anspruch 2, dadurch gekennzeichnet, daß das Umrühren des Schmelzbades durch mechanisches Umrühren der Lösung ausgeführt wird.

6. Verfahren gemäß Anspruch 5, dadurch gekennzeichnet, daß man den Tiegel (2) in der Nähe des oberen Entleerungsauslaufs (18) mit einer Vorrichtung zur Absperrung (30) ausstattet, um die Entleerung der nicht bearbeiteten Keramik nach außen zu verhindern.

7. Verfahren gemäß einem der Ansprüche 1 bis 5, dadurch gekennzeichnet, daß man die geschmolzenen Platingruppenmetalle mit Hilfe eines zweiten Hilfsinduktors (28) zur Erwärmung bei mittlerer Frequenz, der unter dem Hauptinduktor (10) bei hoher Frequenz angebracht ist, am Boden des Tiegels hält.

8. Verfahren gemäß einem der Ansprüche 1 bis 7, dadurch gekennzeichnet, daß die den Tiegel bedeckende Atmosphäre kontrolliert wird, um ihr Oxidations- oder Reduktionsvermögen zur regulieren.

## Claims

1. Method for recovering platinoids deposited in a thin layer on a ceramic substrate coming from a spent catalyst, in which the ceramic and the platinoids are melted in a crucible and then the platinoids (22) which collect under gravity at the bottom of the crucible are separated by settling, characterized in that the combined substrate and platinoids are continuously melted by direct high-frequency induction in a cold crucible (2) divided into sectors, the said crucible being supplied in start-up with a mass of ceramic previously melted and then, continuously, with the cold, spent catalyst, the continuous operation being ensured by the fact that the crucible (2) is provided at its top with a spout (18) for continuous removal of the molten ceramic freed from its platinoids, and, at its lower part, with a removal duct (20) provided with a valve (24), for recovering these same platinoids.

2. Method according to Claim 1, characterized in that the molten bath is stirred in order to accelerate the coalescing and the settling of the platinoids.

3. Method according to Claim 1, characterized in that the crucible comprises a single slot and also acts as a single-turn inductor.

4. Method according to Claim 2, characterized in that the molten bath is stirred by bubbling of gas through the solution.

5. Method according to Claim 2, characterized in that the molten bath is stirred by mechanical agitation of the solution.

6. Method according to Claim 5, characterized in that the crucible (2) is provided, in the vicinity of the upper removal spout (18), with a barrier device (30) for preventing the outwards removal of the ceramic not treated.

7. Method according to any one of Claims 1 to 5, characterized in that the platinoids are kept molten at the bottom of the crucible using a second auxiliary medium-frequency heating inductor (28) situated under the main high-frequency inductor (10).

8. Method according to any one of the preceding Claims 1 to 7, characterized in that the atmosphere existing above the crucible is controlled to regulate its oxidizing or reducing power.
